# EUROPÄISCHE PATENTSCHRIFT

(11) **EP 2 448 797 B1**
(45) Veröffentlichungstag und Bekanntmachung des Hinweises auf die Patenterteilung: **12.08.2015**
(21) Anmeldenummer: 10725481.5
(22) Anmeldetag: 24.06.2010
(51) Int. Cl.: B60T 8/36

(54) **DRUCKSTEUERVENTILANORDNUNG MIT EXZENTRISCH ANGEORDNETEM DOPPELMAGNETEN**
PRESSURE CONTROL VALVE ARRANGEMENT HAVING AN ECCENTRICALLY MOUNTED DOUBLE MAGNET
ENSEMBLE MODULATEUR DE PRESSION À AIMANT DOUBLE PLACÉ DE MANIÈRE EXCENTRÉE

(30) Priorität: 29.06.2009 DE 102009030898
(43) Veröffentlichungstag der Anmeldung: 09.05.2012
(73) Patentinhaber: KNORR-BREMSE Systeme für Nutzfahrzeuge GmbH, 80809 München (DE)
(72) Erfinder: GREBE, Jan, 80939 München (DE); BRENNER, Dirk, 70563 Stuttgart (DE); WEIPPERT, Jochen, 80805 München (DE); ROHN, Wolfgang, 81247 München (DE); JAEHNS, Harald, 81549 München (DE)
(74) Vertreter: Schönmann, Kurt
(86) Internationale Anmeldenummer: PCT/EP2010/058985
(87) Internationale Veröffentlichungsnummer: WO 2011/000768

(56) Entgegenhaltungen:
- EP-A1- 0 266 555
- EP-A1- 0 498 584
- WO-A1-2009/152957
- WO-A2-02/25153
- DE-A1- 2 855 876
- DE-U1- 8 619 384
- JP-A- 8 175 353

## Beschreibung

Die Erfindung betrifft eine Drucksteuerventilanordnung zur Steuerung des Fluiddrucks in einer ABS-Bremsanlage eines Fahrzeugs, gemäß dem Oberbegriff von Anspruch 1.

ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

ABS-Drucksteuerventilanordnungen ohne Relaiswirkung, auf welche sich die vorliegende Erfindung bezieht, finden bei Fahrzeugen wie beispielsweise Nutzfahrzeugen, Omnibussen, Sattelzugmaschinen wie auch bei Anhängern Verwendung. Drucksteuerventilanordnungen ohne Relaiswirkung verfügen meist über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Drucksteuerventile der gattungsgemäßen Art als 1-Kanal-Drucksteuerventile für Blockierschutzanlagen von Kraftfahrzeugen weisen innerhalb des Gehäuses je ein Membranventil als Halteventil und als Auslassventil auf sowie je ein elektromagnetisches Steuerventil für das Halteventil und das Auslassventil auf. Die beiden Membranventile beinhalten jeweils eine mit dem Druck in einem Vorsteuerraum beaufschlagbare Membrane, wobei der Vorsteuerraum durch einen am Gehäuse befestigten Deckel nach außen hin verschlossen ist. Eine Drucksteuerventilanordnung einer ABS-Bremsanlage ist beispielsweise aus der EP 0 266 555 A1 oder aus der DE-A 28 55 876 bekannt. Bei den Drucksteuerventilanordnungen des Stands der Technik weist das Gehäuse einen Druckmittelanschluss zur Druckbeaufschlagung und/oder Druckentlastung auf, welcher mit einem Fußbremsventil verbunden ist. Weiterhin sind die beiden Membranventile am Gehäuse seitlich angeordnet, wobei die entsprechenden Vorsteuerräume durch seitlich am Gehäuse befestigte Deckel verschlossen sind, d.h. dort sind Flächennormalen auf die Membranen beider Membranventile senkrecht zur Mittelachse des Druckmittelanschlusses angeordnet.

Weiterhin ist beim Stand der Technik, insbesondere gemäß Fig.1 der DE-A-28 55 876 eine Symmetrieebene der Mittelachsen der Magnetspulen des Doppelmagneten der beiden elektromagnetischen Steuerventile in Bezug zu einer Mittelachse des Druckmittelanschlusses (dort: Druckmitteleinlass) zentrisch angeordnet. Dabei legen die Mittelachsen der beiden Magnetspulen zugleich auch die Positionen der Ventilsitze der elektromagnetischen Steuerventile der Drucksteuerventilanordnung fest, weil die Mittelachsen der Magnetspulen koaxial mit den Ventilsitzen und den Magnetankern angeordnet sind. Weiterhin stehen die Ventilsitze der elektromagnetischen Steuerventile über Druckmittelkanäle mit dem Druckmittelanschluss in Verbindung bzw. münden in diesen ein. Diese Druckmittelkanäle werden bevorzugt koaxial mit den Mittelachsen der Magnetspulen durch spanabhebende Fertigung wie Bohren hergestellt, um aus Kostengründen ein Umspannen des Gehäuses zur Fertigung von schräg verlaufenden Druckmittelkanälen oder Gehäusebohrungen zu vermeiden. Die Druckmittelkanäle verlaufen folglich parallel zueinander in vertikaler Richtung.

Damit die von den Ventilsitzen der elektromagnetischen Steuerventile ausgehenden Druckmittelkanäle folglich in vertikaler Richtung im Gehäuse spanabhebend gefertigt werden und zugleich beide in den Druckmittelanschluss münden können, muss der Innendurchmesser des Druckmittelanschlusses relativ groß sein, zumal auch die Magnetspulen einen gewissen Durchmesser nicht unterschreiten können. Weil aber ein entsprechend großer Durchmesser des Druckmittelanschlusses strömungstechnisch ungünstig ist, wird in der Praxis eine Reduzierhülse in den Druckmittelanschluss eingesetzt, die den wirksamen Strömungsdurchmesser reduziert.

Diese Vorgehensweise ist jedoch mit zusätzlichen Kosten für die Herstellung und Montage der Reduzierhülse verbunden, was angesichts der hohen Anzahl von einem Zulieferer für Fahrzeuge gelieferte Drucksteuerventilanordnungen in der Summe einen relativ hohen Kostenbetrag ausmacht.

Eine weitere Drucksteuerventilanordnung wird in der nachveröffentlichten WO 2009/152957 A1 beschrieben.

Der Erfindung liegt die Aufgabe zugrunde, eine Drucksteuerventilanordnung der eingangs erwähnten Art derart weiter zu bilden, dass sie einfacher und kostengünstiger zu fertigen und zu montieren ist.

Diese Aufgabe wird erfindungsgemäß durch die Merkmale von Anspruch 1 gelöst.

### Offenbarung der Erfindung

Wie eingangs erläutert, sind die Mittelachsen der Magnetspulen koaxial mit den Ventilsitzen der elektromagnetischen Steuerventile und jeweils ein Ventilsitz an einem Ende eines Druckmittelkanals ausgebildet, welcher den betreffenden Ventilsitz mit dem Druckmittelanschluss verbindet. Da zwei elektromagnetische Steuerventile vorhanden sind, müssen folglich zwei im Gehäuse ausgebildete Druckmittelkanäle von den betreffenden, mit den Mittelachsen der Magnetspulen koaxialen Ventilsitzen in den Druckmittelanschluss führen. Dabei sollen schräg, d.h. abweichend von der einer Vertikalen oder von einer Horizontalen verlaufende Druckmittelkanäle vermieden werden, um ein Umspannen des Gehäuses während der Fertigung zu vermeiden.

Es wird vorgeschlagen, dass eine Symmetrieebene der Mittelachsen der Magnetspulen des Doppelmagneten der beiden elektromagnetischen Steuerventile in Bezug zu einer Mittelachse des Druckmittelanschlusses parallel und exzentrisch angeordnet ist.

Dann reduziert sich der Abstand zwischen der Mündung des im Gehäuse ausgebildeten Verbindungskanals im Druckmittelanschluss zwischen dem Ventilsitz eines der elektromagnetischen Steuerventile und dem Druckmittelanschluss einerseits und der Mittelachse des Druckmittelanschlusses andererseits gegenüber dem Stand der Technik, weil die Mittelachse einer der Magnetspulen des Doppelmagneten und damit auch der hierzu koaxiale Ventilsitz des betreffenden elektromagnetischen Steuerventils sowie auch der betreffende Druckmittelkanal nun näher an die Mittelachse des Druckmittelanschlusses heranrückt und folglich in geringerem Abstand zu dieser in den Druckmittelanschluss münden kann. Der vom Ventilsitz des anderen elektromagnetischen Steuerventils ausgehende andere Druckmittelkanal braucht dann nicht mehr parallel zu dem einen, beispielsweise vertikalen Druckmittelkanal verlaufen, sondern kann beispielsweise in horizontaler Richtung verlaufend in einen im Gehäuse ausgebildeten Ringkanal münden, welcher wiederum mit dem Druckmittelanschluss in Verbindung steht. Dann verlaufen die Druckmittelkanäle in vertikaler und horizontaler Richtung, so dass das Gehäuse während der Fertigung nicht umgespannt werden muss. Somit kann der Durchmesser des Druckmittelanschlusses kleiner und somit strömungstechnisch günstiger ausfallen. Insbesondere kann auf eine Reduzierhülse verzichtet werden.

Erfindungsgemäß ist das Gehäuse mit wenigstens einer in Seitenflächen des Gehäuses mündenden Durchgangsbohrung versehen, welche als Haltemittel zum Halten der Drucksteuerventilanordnung an einem Trägerkörper vorgesehen ist, wobei die Symmetrieebene der Mittelachsen der Magnetspulen des Doppelmagneten der beiden elektromagnetischen Steuerventile um die Exzentrizität versetzt in Bezug zu einer senkrecht zu einer Mittelachse der Durchgangsbohrung angeordneten Symmetrieebene der Durchgangsbohrung angeordnet ist. Dadurch erfährt die exzentrische Anordnung des Doppelmagneten eine zusätzlich Bezugnahme auf eine relevante geometrische Größe der Drucksteuerventilanordnung, weil die Länge der Durchgangsbohrung als standardisiertes Einbaumaß der Drucksteuerventilanordnung aus Platzgründen festgelegt und nicht veränderbar ist. Sie legt die maximale Breite des Gehäuses fest.

Durch die in den Unteransprüchen aufgeführten Maßnahmen sind vorteilhafte Weiterbildungen und Verbesserungen der in Anspruch 1 angegebenen Erfindung möglich.

Gemäß einer Weiterbildung ist bei dem einem Membranventil der beiden Membranventile die senkrecht zu der zugeordneten Membrane verlaufende Flächennormale parallel zur Mittelachse der Durchgangsbohrung und senkrecht zur Mittelachse des Druckmittelanschlusses und bei dem anderen Membranventil die senkrecht zur zugeordneten Membrane verlaufende Flächennormale senkrecht zur Mittelachse der Durchgangsbohrung und senkrecht zur Mittelachse des Druckmittelanschlusses angeordnet. Dies kann beispielsweise dadurch realisiert sein, dass das eine Membranventil seitlich und das andere Membranventil bodenseitig oder kopfseitig am Gehäuse angeordnet ist.

Wenn dann ein einen Vorsteuerraum des einen, beispielsweise am Gehäuse seitlich angeordneten Membranventils zur Außenseite verschließender und am Gehäuse befestigter Deckel aus wenigstens einem Kunststoff besteht, kann die Wandstärke dieses Deckels dicker ausfallen als beim Stand der Technik, bei welchem beide Membranventile seitlich am Gehäuse angeordnet sind und wegen der standardisierten Gesamtbreite des Gehäuses die Dicke der Deckel geringer ausfallen muss. Der gegenüber dem Stand der Technik dickere Kunststoffdeckel ist dann steifer. Somit nimmt die Verformungsneigung des Deckels ab, weshalb sich die Sicherheit des betreffenden Membranventils gegenüber einer Leckage des Vorsteuerraums erhöht.

Bevorzugt besteht ein einen Vorsteuerraum des anderen Membranventils zur Außenseite verschließender und am Gehäuse befestigter Deckel ebenfalls aus einem Kunststoff.

Dabei kann wenigstens einer der Deckel im Sinne einer vorteilhaften Doppelfunktion zugleich einen im Gehäuse ausgebildeten, vom jeweiligen Vorsteuerraum getrennten Druckmittelkanal verschließen.

Der Druckmittelanschluss kann insbesondere zur Verbindung mit einem Betriebsbremsventil einer druckmittelbetätigten Bremseinrichtung eines Fahrzeugs vorgesehen sein.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig. 2a: eine schematische Darstellung einer einen Bremszylinder ansteuernden Drucksteuerventilanordnung im geöffneten Zustand (Druckaufbau),
- Fig.2b: eine schematische Darstellung der Drucksteuerventilanordnung von Figur 2a im geschlossenen Zustand (Druckabbau),
- Fig.3: eine Vorderansicht einer konkreten Ausführung der Drucksteuerventilanordnung von Fig.2a und Fig.2b gemäß einer bevorzugten Ausführungsform der Erfindung;
- Fig.4: eine Seitenansicht der Drucksteuerventilanordnung von Fig.3;
- Fig.5: eine Schnittdarstellung entlang der Linie V-V von Fig.4;
- Fig.6: die andere Seitenansicht der Drucksteuerventilanordnung von Fig.3;
- Fig.7: eine Schnittdarstellung entlang der Linie VII-VII von Fig.6.

### Beschreibung des Ausführungsbeispiels

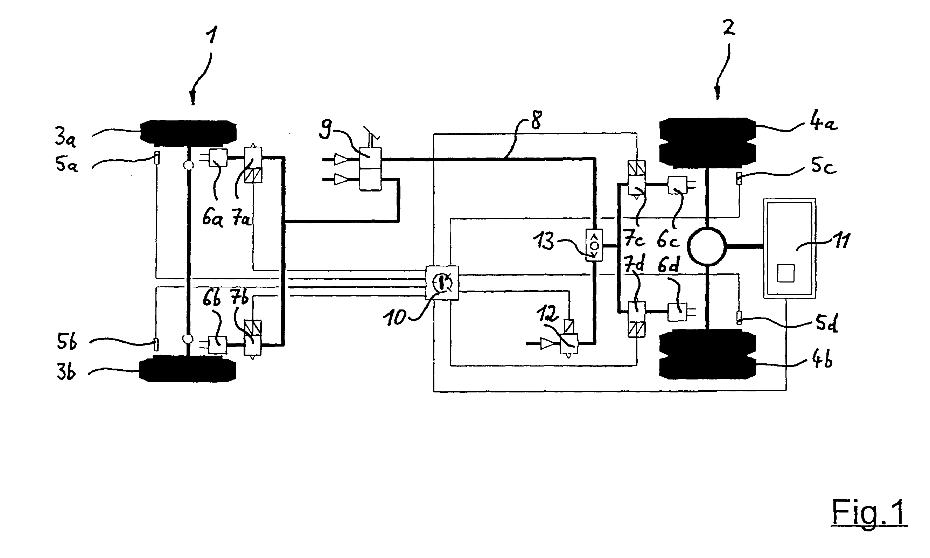

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

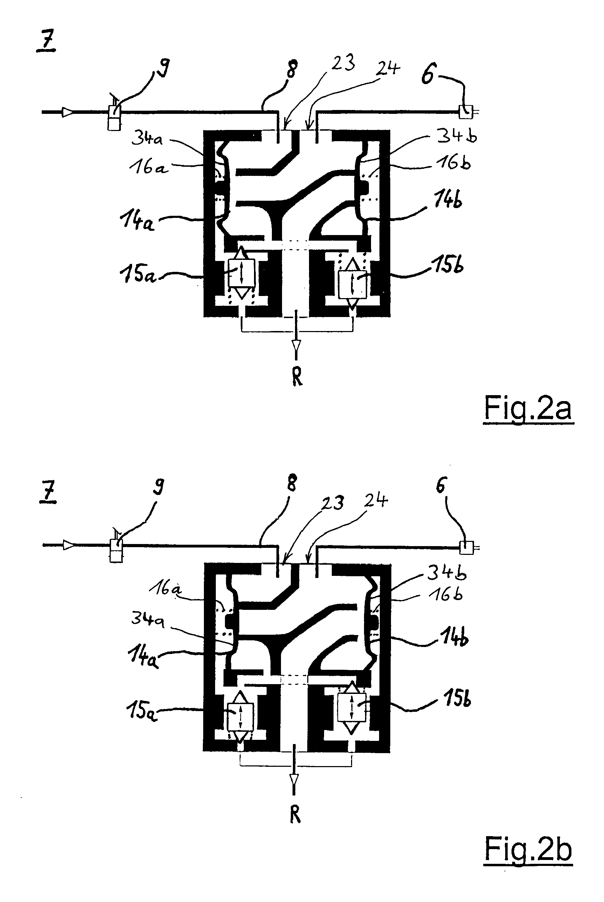

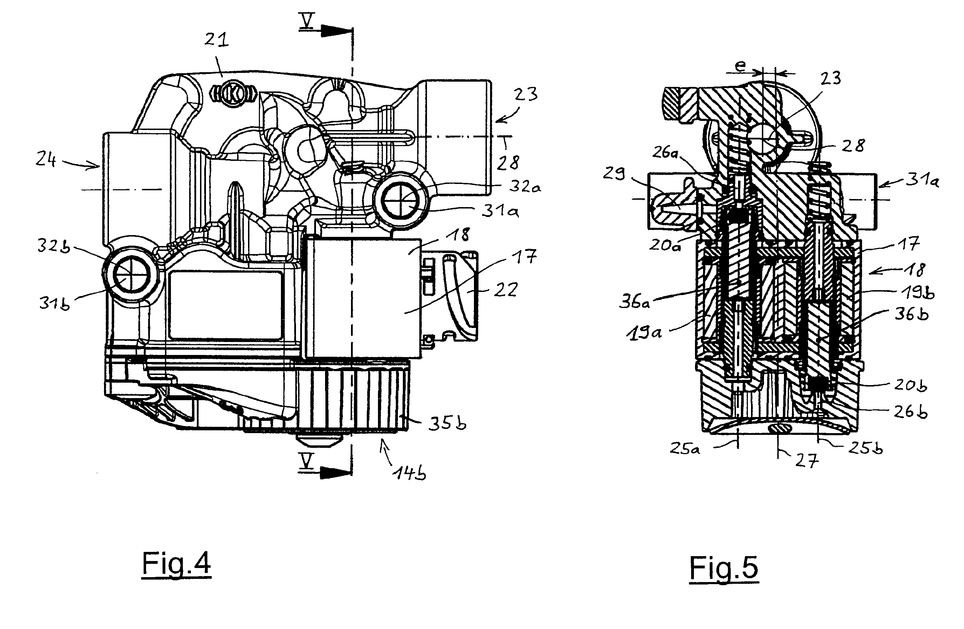

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zwecke mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Figur 2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Eine Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Figur 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 15a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

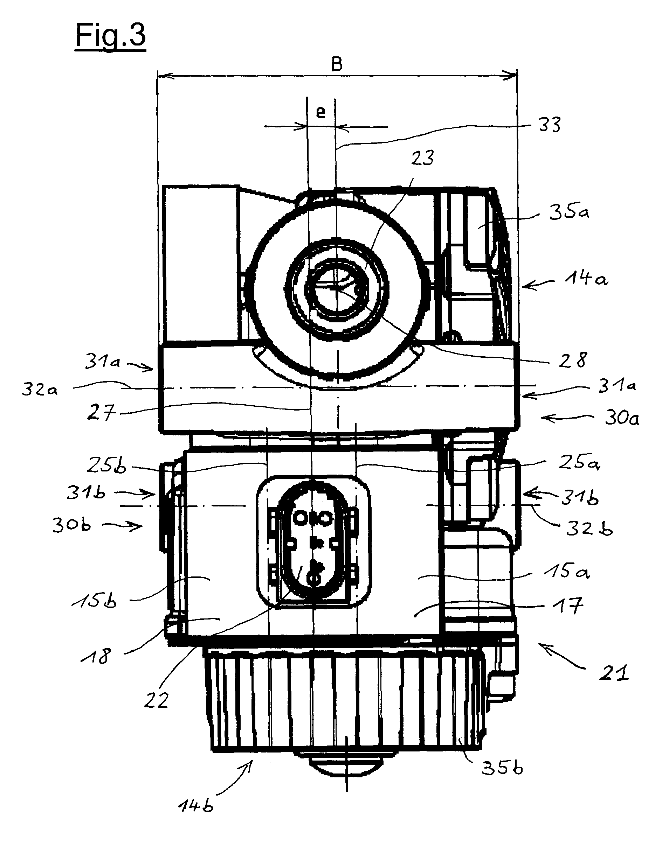

In Fig.3 bis Fig.5 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

Die beiden Elektromagnetventile 15a, 15b weisen einen in einem Block 17 zusammengefassten Doppelmagneten 18 mit zwei Magnetspulen 19a, 19b auf, welche mit zwei Magnetventilsitzen 20a, 20b zusammen wirken. Wie aus Fig.5 anschaulich hervorgeht, werden durch Bestromung der Magnetspulen 19a, 19b mit den Magnetventilsitzen 20a, 20b der Elektromagnetventile 15a, 15b zusammen wirkende Magnetanker 36a, 36b als Ventilschließglieder betätigt.

Der den Doppelmagneten 18 umfassende Block 17 ist an einem Gehäuse 21 der Drucksteuerventilanordnung 7 vorzugsweise frontseitig befestigt und weist einen Steckeranschluss 22 zur Stromversorgung des Doppelmagneten 18 auf. Dieses Gehäuse 21 weist weiterhin einen Druckmittelanschluss 23 zur Druckbeaufschlagung und/oder Druckentlastung der Drucksteuerventilanordnung 7 sowie einen in Fig.4 sichtbaren Arbeitsanschluss 24 zum Anschluss des Bremszylinders 6 auf.

Der Druckmittelanschluss 23 ist, wie Fig.2a und Fig.2b zeigen, über die Bremsdruckleitung 8 mit dem Fuß- oder Betriebsbremsventil 9 der druckmittelbetätigten Bremseinrichtung verbunden und wird entsprechend einer Betätigung des Fußbremsventils 9 be- oder entlüftet.

Wie insbesondere aus Fig.5 hervorgeht, sind die Mittelachsen 25a, 25b der Magnetspulen 19a, 19b koaxial mit den Magnetventilsitzen 20a, 20b der Elektromagnetventile 15a, 15b und jeweils ein Magnetventilsitz 20a, 20b an einem Ende eines Druckmittelkanals 26a, 26b ausgebildet, welcher den betreffenden Magnetventilsitz 20a, 20b mit dem Druckmittelanschluss 23 verbindet.

Eine in Fig.3 gezeigte Symmetrieebene 27 der Mittelachsen 25a, 25b der Magnetspulen 19a, 19b des Doppelmagneten 18 der beiden Elektromagnetventile 15a, 15b ist in Bezug zu einer Mittelachse 28 des Druckmittelanschlusses 23 um eine Exzentrizität e exzentrisch versetzt angeordnet. Die Mittelachse 28 des Druckmittelanschlusses 23 ist parallel in Bezug zu dieser Symmetrieebene 27.

Dann reduziert sich der Abstand zwischen der Mündung beispielsweise des Druckmittelkanals 26a im Druckmittelanschluss 23 und der Mittelachse 28 des Druckmittelanschlusses 23, weil die Mittelachse 25a der einen der Magnetspulen 19a des Doppelmagneten 18 und damit auch der Magnetventilsitz 20a des betreffenden Elektromagnetventils 15a sowie auch der betreffende Druckmittelkanal 26a nun näher an die Mittelachse 28 des Druckmittelanschlusses 23 heranrückt und folglich der Druckmittelkanal 26a nun in geringerem Abstand zu dieser in den Druckmittelanschluss 23 münden kann, wie Fig.5 anschaulich zeigt. Selbstverständlich kann der Doppelmagnet 18 auch in der anderen Richtung, in Fig.3 nach rechts gegenüber der Mittelachse 28 des Druckmittelanschlusses 23 um eine Exzentrizität e versetzt angeordnet sein.

Bedingt durch die Exzentrizität e wird der Abstand des vom Magnetventilsitz 20b des anderen Elektromagnetventils 15b ausgehenden anderen Druckmittelkanal 26b relativ zur Mittelachse 28 des Druckmittelanschlusses 23 hingegen vergrößert. Dieser Druckmittelkanal 26b mündet deshalb nicht direkt in den Druckmittelanschluss 23, sondern zunächst beispielsweise in einen im Gehäuse 21 ausgebildeten Ringkanal 29, welcher wiederum mit dem Druckmittelanschluss 23 in Verbindung steht. Die Exzentrizität beträgt vorzugsweise mehr als 1 mm.

Das Gehäuse 21 ist mit wenigstens einer, hier beispielsweise zwei in beide Seitenflächen 30a, 30b des Gehäuses 21 mündenden Durchgangsbohrungen 31 a, 31 b versehen, durch welche Haltemittel zum Halten der Drucksteuerventilanordnung an einem Trägerkörper, beispielsweise an einem Chassis des Fahrzeugs hindurch ragen, beispielsweise Schrauben. Die Mittelachsen 32a, 32b der beiden Durchgangsbohrungen 31 a, 31 b sind bevorzugt parallel zueinander.

Dabei ist die Symmetrieebene 27 der Mittelachsen 25a, 25b der Magnetspulen 19a, 19b des Doppelmagneten 18 der beiden Elektromagnetventile 15a, 15b exzentrisch in Bezug zu einer senkrecht zu den Mittelachsen 32a, 32b der Durchgangsbohrungen 31 a, 31 b angeordneten Symmetrieebene 33 angeordnet, wie aus Fig.3 hervorgeht. Dabei liegt die Mittelachse 28 des Druckmittelanschlusses 23 in dieser Symmetrieebene. Die axiale Länge der Durchgangsbohrungen 31 a, 31 b gilt als standardisiertes Einbaumaß der Drucksteuerventilanordnung 7 und ist aus Platzgründen festgelegt und nicht veränderbar, sie legt die maximal zulässige Breite B des Gehäuses 21 fest.

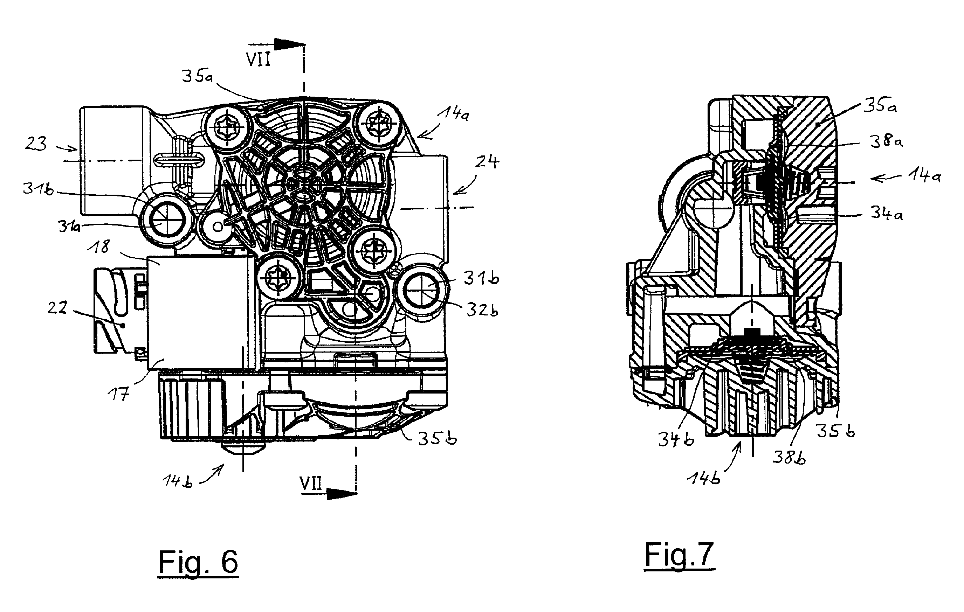

Das eine Membranventil 14a ist bevorzugt seitlich und das andere Membranventil 14b bevorzugt bodenseitig am Gehäuse 21 angeordnet, wie Fig.4 und Fig.7 zeigen.

Ein solches Membranventil 14a, 14b weist als Ventilkörper eine Membrane 34a, 34b auf, die durch Einleiten von Druckmittel in eine Steuerkammer 38a, 38b beaufschlagbar ist, die gehäuseaußenseitig jeweils durch einen mittels Urformen wie Spritzgießen hergestellten Deckel 35a, 35b abgedeckt ist, welcher am Gehäuse 21 befestigt ist. Dabei wird die Steuerkammer 38a, 38b zwischen der Membrane 34a, 34b und dem Deckel 35a, 35b ausgebildet. Die Deckel 35a, 35b bestehen vorzugsweise aus wenigstens einem Kunststoff.

Wenigstens einer der Deckel 35a, 35b kann so ausgebildet sein, dass er neben seiner Funktion als Verschlusskörper für die zugeordnete Steuerkammer 38a, 38b zugleich eine im Gehäuse 21 ausgebildete und nicht zur Verbindung mit der Steuerkammer 38a, 38ba vorgesehene Bohrung verschließt, welche in eine Seitenfläche 30a, 30b des Gehäuses 21 mündet.

Bei dem einem Membranventil 14a der beiden Membranventile 14a, 14b ist bevorzugt die senkrecht zu der zugeordneten Membrane 34a verlaufende Flächennormale parallel zu den Mittelachsen 32a, 32b der Durchgangsbohrungen 31 a, 31 b und senkrecht zur Mittelachse 28 des Druckmittelanschlusses 23, wie anhand von Fig.3 leicht vorstellbar ist. Bei dem anderen Membranventil 14b ist hingegen die senkrecht zur zugeordneten Membrane 34b verlaufende Flächennormale senkrecht zu den Mittelachsen 32a, 32b der Durchgangsbohrungen 31 a, 31 b und senkrecht zur Mittelachse 28 des Druckmittelanschlusses 23 angeordnet. Mit anderen Worten ist dann in der Ansicht von Fig.3 das eine Membranventil 14a seitlich und das andere Membranventil 14b bodenseitig oder alternativ kopfseitig am Gehäuse 21 angeordnet.

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14 a/b: Membranventil
- 15 a/b: Elektromagnetventil
- 16 a/b: Federelement
- 17: Block
- 18: Doppelmagnet
- 19 a/b: Magnetspulen
- 20 a/b: Magnetventilsitze
- 21: Gehäuse
- 22: Steckeranschluss
- 23: Druckmittelanschluss
- 24: Arbeitsanschluss
- 25 a/b: Mittelachsen Magnetspulen
- 26 a/b: Druckmittelkanal
- 27: Symmetrieebene
- 28: Mittelachse
- 29: Ringkanal
- 30 a/b: Seitenflächen
- 31 a/b: Durchgangsbohrungen
- 32 a/b: Mittelachsen
- 33: Symmetrieebene
- 34 a/b: Membrane
- 35 a/b: Deckel
- 36 a/b: Magnetanker
- 38 a/b: Steuerkammer

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder (6) adaptiv anpassbar ist, wobei
a) in einem Gehäuse (21) der Drucksteuerventilanordnung (7) zwei Membranventile (14a, 14b) sowie zwei von einer elektronischen Steuereinrichtung (10) ansteuerbare elektromagnetische Steuerventile (15a, 15b) zum Vorsteuern der Membranventile (14a, 14b) vorgesehen sind,
b) die beiden elektromagnetischen Steuerventile (15a, 15b) einen Doppelmagneten (18) mit zwei Magnetspulen (19a, 19b) sowie mit Magnetventilsitzen (20a, 20b) zusammen wirkende und durch Bestromung der Magnetspulen (19a, 19b) betätigbare Magnetanker (36a, 36b) aufweisen,
c) das Gehäuse (21) wenigstens einen mit einem Betriebsbremsventil (9) verbundenen Druckmittelanschluss (23) zur Druckbeaufschlagung und/oder Druckentlastung der Drucksteuerventilanordnung (7) sowie wenigstens einen Arbeitsanschluss (24) zum Anschluss an den Bremszylinder (6) aufweist, wobei
d) eine Symmetrieebene (27) der Mittelachsen (25a, 25b) der Magnetspulen (19a, 19b) des Doppelmagneten (18) der elektromagnetischen Steuerventile (15a, 15b) in Bezug zu einer Mittelachse (28) des Druckmittelanschlusses (23) parallel und um eine Exzentrizität (e) versetzt angeordnet ist, und wobei
e) das Gehäuse (21) mit wenigstens einer in Seitenflächen (30a, 30b) des Gehäuses (21) mündenden Durchgangsbohrung (31a, 31b) versehen ist, welche als Haltemittel zum Halten der Drucksteuerventilanordnung (7) an einem Trägerkörper vorgesehen ist, wobei die Symmetrieebene (27) der Mittelachsen (25a, 25b) der Magnetspulen (19a, 19b) des Doppelmagneten (18) der beiden elektromagnetischen Steuerventile (15a, 15b) um die Exzentrizität (e) versetzt in Bezug zu einer senkrecht zu einer Mittelachse (32a, 32b) der Durchgangsbohrung (31 a, 31 b) angeordneten Symmetrieebene (33) der Durchgangsbohrung (31 a, 31 b) angeordnet ist.

2. Drucksteuerventilanordnung nach Anspruch 1, **dadurch gekennzeichnet, dass** bei dem einem Membranventil (14a) der Membranventile (14a, 14b) die senkrecht zu der zugeordneten Membrane (34a) verlaufende Flächennormale parallel zur Mittelachse (32a, 32b) der Durchgangsbohrung (31a, 31b) und senkrecht zur Mittelachse (28) des Druckmittelanschlusses (23) und bei dem anderen Membranventil (14b) die senkrecht zur zugeordneten Membrane (34b) verlaufende Flächennormale senkrecht zur Mittelachse (32a, 32b) der Durchgangsbohrung (31 a, 31 b) und senkrecht zur Mittelachse (28) des Druckmittelanschlusses (23) angeordnet ist.

3. Drucksteuerventilanordnung nach Anspruch 2, **dadurch gekennzeichnet, dass** ein einen Vorsteuerraum des einen Membranventils (14a) zur Außenseite verschließender und am Gehäuse (21) befestigter Deckel (35a) aus wenigstens einem Kunststoff besteht.

4. Drucksteuerventilanordnung nach Anspruch 2 oder 3, **dadurch gekennzeichnet, dass** ein einen Vorsteuerraum des anderen Membranventils (14b) zur Außenseite verschließender und am Gehäuse(21) befestigter Deckel (35b) aus wenigstens einem Kunststoff besteht.

5. Drucksteuerventilanordnung nach Anspruch 3 oder 4, **dadurch gekennzeichnet, dass** wenigstens einer der Deckel (35a, 35b) zugleich einen im Gehäuse (21) ausgebildeten und vom jeweiligen Vorsteuerraum getrennten Druckmittelkanal verschließt.

6. Drucksteuerventilanordnung nach einem der vorhergehenden Ansprüche, **dadurch gekennzeichnet, dass** der Druckmittelanschluss (23) zur Verbindung mit einem Betriebs- oder Fußbremsventil (9) einer druckmittelbetätigten Bremseinrichtung eines Fahrzeugs vorgesehen ist.

7. Bremsschlupfgeregelte und druckmittelbetätigte Bremseinrichtung eines Fahrzeugs, beinhaltend wenigstens eine Drucksteuerventilanordnung (7) nach einem der vorhergehenden Ansprüche.

## Claims

1. Pressure control valve arrangement (7) for controlling the fluid pressure in an ABS brake system of a vehicle in such a way that, during a tendency of individual wheels of the vehicle to lock, the brake pressure in at least one assigned brake cylinder (6) can be matched adaptively,
a) two diaphragm valves (14a, 14b) and two electromagnetic control valves (15a, 15b), activatable by an electronic control device (10), for the pilot control of the diaphragm valves (14a, 14b) being provided in the housing (21) of the pressure control valve arrangement (7),
b) the two electromagnetic control valves (15a, 15b) having a double magnet (18) with two magnet coils (19a, 19b) and also magnet armatures (36a, 36b) cooperating with solenoid valve seats (20a, 20b) and actuable by current being applied to the magnet coils (19a, 19b),
c) the housing (21) having at least one pressure medium connection (23), connected to a service brake valve (9), for acting with pressure upon and/or relieving the pressure of the pressure control valve arrangement (7) and also at least one working connection (24) for connecting to the brake cylinder (6),
d) a plane of symmetry (27) of the mid-axes (25a, 25b) of the magnet coils (19a, 19b) of the double magnet (18) of the electromagnetic control valves (15a, 15b) being arranged parallel, and offset by the amount of an eccentricity (e), with respect to a mid-axis (28) of the pressure medium connection (23), and
e) the housing (21) being provided with at least one through bore (31a, 31b) which issues in side faces (30a, 30b) of the housing (21) and which is intended as a holding means for holding the pressure control valve arrangement (7) on a carrier body, the plane of symmetry (27) of the mid-axes (25a, 25b) of the magnet coils (19a, 19b) of the double magnet (18) of the two electromagnetic control valves (15a, 15b) being arranged, offset by the amount of the eccentricity (e) with respect to a plane of symmetry (33) of the through bore (31a, 31b), said plane of symmetry being arranged perpendicularly to a mid-axis (32a, 32b) of the through bore (31a, 31b).

2. Pressure control valve arrangement according to Claim 1, **characterized in that**, in one diaphragm valve (14a) of the diaphragm valves (14a, 14b), the surface normal running perpendicularly with respect to the assigned diaphragm (34a) is arranged parallel to the mid-axis (32a, 32b) of the through bore (31a, 31b) and perpendicularly to the mid-axis (28) of the pressure medium connection (23), and, in the other diaphragm valve (14b), the surface normal running perpendicularly with respect to the assigned diaphragm (34b) is arranged perpendicularly to the mid-axis (32a, 32b) of the through bore (31a, 31b) and perpendicularly to the mid-axis (28) of the pressure medium connection (23).

3. Pressure control valve arrangement according to Claim 2, **characterized in that** a cover (35a) closing a pilot control space of one diaphragm valve (14a) with respect to the outside and fastened to the housing (21) is composed of at least one plastic.

4. Pressure control valve arrangement according to Claim 2 or 3, **characterized in that** a cover (35b) closing a pilot control space of the other diaphragm valve (14b) with respect to the outside and fastened to the housing (21) is composed of at least one plastic.

5. Pressure control valve arrangement according to Claim 3 or 4, **characterized in that** at least one of the covers (35a, 35b) at the same time closes a pressure medium duct formed in the housing (21) and separated from the respective pilot control space.

6. Pressure control valve arrangement, according to one of the preceding claims, **characterized in that** the pressure medium connection (23) is provided for connection to a service or foot-operated brake valve (9) of a pressure medium-actuated brake apparatus of a vehicle.

7. Traction-controlled and pressure medium-actuated brake apparatus of a vehicle, comprising at least one pressure control valve arrangement (7) according to one of the preceding claims.

## Revendications

1. Ensemble modulateur de pression (7) pour la régulation de la pression d'un fluide dans un système de freinage ABS d'un véhicule de manière, qu'au cours d'une tendance de blocage des roues individuelles du véhicule, la pression de freinage peut être adaptée dans au moins un cylindre de freinage (6) affecté, dans lequel
a) deux soupapes à membrane (14a, 14b) ainsi que deux soupapes de distribution électromagnétiques (15a, 15b) à commande par un moyen électronique de commande (10) sont disposées dans un carter (21) de l'ensemble modulateur de pression (7) pour le pilotage desdites soupapes à membrane (14a, 14b),
b) lesdites deux soupapes de distribution électromagnétiques (15a, 15b) comprennent un aimant double (18) à deux bobines électromagnétiques (19a, 19b) ainsi que des noyaux magnétique (36a, 36b) coopérant avec des sièges (20a, 20b) de soupape magnétiques et actionnables par le passage d'un courant par lesdites bobines électromagnétiques (19a, 19b),
(c) ledit carter (21) comprend au moins un raccord de fluide sous pression (23), qui est relié à une soupape de frein de service (9), pour la sollicitation par pression et/ou la détente de pression de l'ensemble modulateur de pression (7), ainsi qu'au moins un raccord de travail (24) pour le raccordement audit cylindre de frein (6),
(d) à un plan de symétrie (27) des axes centraux (25a, 25b) desdites bobines électromagnétiques (19a, 29b) dudit aimant double (18) desdites soupapes de distribution (15a, 15b) étant disposé en parallèle à un axe central (28) dudit raccord de fluide sous pression (23), et en déport par une excentricité (e), et
(e) audit carter (21) étant muni d'au moins un perçage traversant (31a, 31b) débouchant dans des faces latérales (30a, 30b) dudit carter (21), qui est formé en tant que moyen de retenue afin de tenir l'ensemble modulateur de pression (7) à un corps de support, audit plan de symétrie (27) des axes centraux (25a, 25b) desdites bobines électromagnétiques (19a, 19b) dudit aimant double (18) desdites deux soupapes de distribution électromagnétiques (15a, 15b) étant disposé à un déport par ladite excentricité (e) par rapport à un plan de symétrie (33) dudit perçage traversant (31a, 31 b), qui est disposé perpendiculairement à un axe central (32a, 32b) dudit perçage traversant (31a, 31 b).

2. Ensemble modulateur de pression selon la revendication 1, **caractérisé en ce que** dans une première soupape à membrane (14a) desdites soupapes à membrane (14a, 14b) la normale à la surface, qui s'étend perpendiculairement à la membrane (34a) affectée, est disposée en parallèle audit axe central (32a, 32b) dudit perçage traversant (31a, 31 b) et perpendiculairement audit axe central (28) dudit raccord de fluide sous pression (23), pendant que dans l'autre soupape à membrane (14b) la normale à la surface, qui s'étend perpendiculairement à la membrane affectée (34b), est disposée perpendiculairement à l'axe central (32a, 32b) dudit perçage traversant (31a, 31b) et perpendiculairement à l'axe central (28) dudit raccord de fluide sous pression (23).

3. Ensemble modulateur de pression selon la revendication 2, **caractérisé en ce qu'**un couvercle (35a) fermant une chambre de pilotage der ladite première soupape à membrane (14a) vers l'extérieur, qui est fixé audit carter (21), consiste en au moins une matière plastique.

4. Ensemble modulateur de pression selon la revendication 2 ou 3, **caractérisé en ce qu'**un couvercle (35b) fermant une chambre de pilotage de l'autre soupape à membrane (14b) vers l'extérieur, qui est fixé audit carter (21), consiste en au moins une matière plastique.

5. Ensemble modulateur de pression selon la revendication 3 ou 4, **caractérisé en ce qu'**au moins un desdits couvercles (35a, 35b) ferme, en même temps, un passage de fluide de pression, qui est formé dans ledit carter (21), en étant séparé de la chambre de pilotage respective.

6. Ensemble modulateur de pression selon une quelconque des revendications précédentes, **caractérisé en ce que** ledit raccord de fluide sous pression (23) est conçu pour la connexion à la soupape de freinage de service ou la soupape de pédale de frein (9) d'un système de freinage commandé par un fluide sous pression d'un véhicule.

7. Système de freinage d'un véhicule, qui est réglé en glissement au freinage et actionné par un fluide sous pression, comprenant au moins un ensemble modulateur de pression (7) selon une quelconque des revendications précédentes.
